# EUROPEAN PATENT APPLICATION

(11) **EP 2 268 017 A2**
(43) Date of publication of application: **29.12.2010**
(21) Application number: 10182088.4
(22) Date of filing: 18.02.2004
(51) Int. Cl.: H04N 7/12, H04N 7/26, H04N 7/50

(54) **Moving picture coding method, moving picture decoding method and program**

(30) Priority: 21.02.2003 US 449209 P; 26.11.2003 US 724317; 28.11.2003 JP 2003398981
(62) Divisional of application: 04712315.3
(71) Applicant: Panasonic Corporation, Kadoma-shi Osaka 571-8501 (JP)
(72) Inventor: Lu, Jiuhuai, Osaka-shi, Osaka 540-6207 (JP); Kashiwagi, Yoshiichiro, Osaka-shi, Osaka 540-6207 (JP); Kozuka, Masayuki, Osaka-shi, Osaka 540-6207 (JP); Kadono, Shinya, Osaka-shi, Osaka 540-6207 (JP)
(74) Representative: Eisenführ, Speiser & Partner

(57) **Abstract**

The present invention provides a picture coding method for predictively coding a picture with reference to a picture obtained from pictures which are coded and decoded; performing filtering processing on a decoded picture; storing a filtered picture in a memory as a reference picture, out of two pictures: a filtered picture and an unfiltered picture, said filtered picture being a filtered decoded picture and said unfiltered picture being the decoded picture; and storing an unfiltered picture in the memory as a picture for output out of the two pictures.

## Description

### Technical Field

The present invention relates to coding and decoding methods for coding a picture based on prediction with reference to decoded pictures. In particular, the invention relates to moving picture coding and decoding methods employing a loop filter for reducing distortion caused by compression errors in motion compensation.

### Background Art

In general, a coding for compressing a moving picture reduces the amount of data by eliminating temporal as well as spatial redundancies. In inter-picture coding, which aims to reduce the temporal redundancy, a predictive image is obtained by performing motion estimation and motion compensation on a block-by-block basis with reference to forward and backward pictures so that a differential between the obtained predictive image and a current block to be coded is coded. A picture is decoded using the procedure almost reverse to the one used in the coding method.

A square-shaped noise called "block noise" may appear in a decoded picture as compression artifacts due to the motion compensation performed on a block-by-block basis. As a solution to the block noise, a loop filter is employed in the prior art, for example, the ITU-T Rec. H.264 | ISO/IEC 14496-10 AVC Joint Final Committee Draft of Joint Video Specification (2002-8-10).

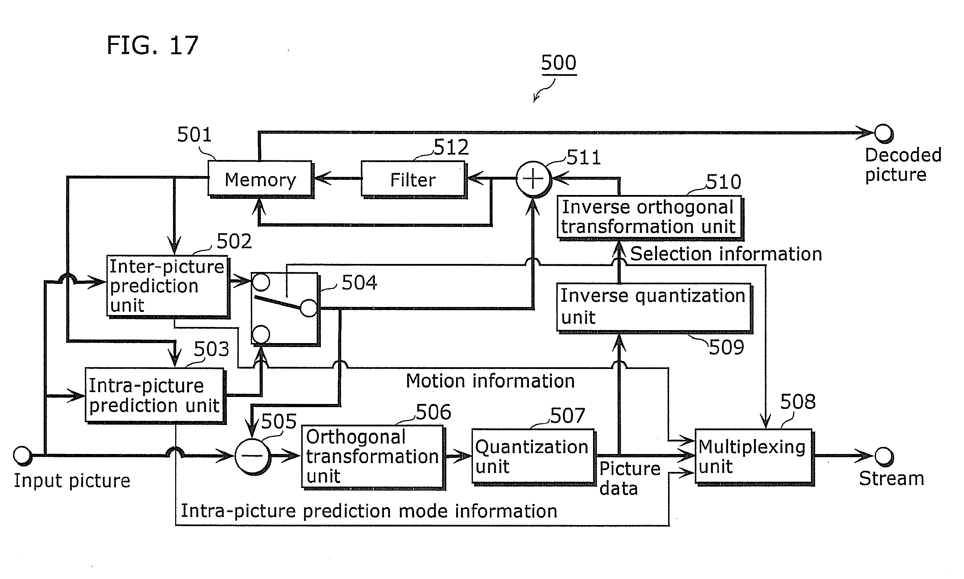

FIG. 17 is a block diagram showing a structure of the conventional picture coding apparatus equipped with a loop filter as described above. As shown in the diagram, a picture coding apparatus 500 is composed of a memory 501, an inter-picture prediction unit 502, an intra-picture prediction unit 503, a switch 504, a subtracter 505, an orthogonal transformation unit 506, a quantization unit 507, a multiplexing unit 508, an inverse quantization unit 509, an inverse orthogonal transformation unit 510, an adder 511 and a filter 512.

The filter 512 is a loop filter for reducing block noise in the picture decoded after having been coded through the subtracter 505, the orthogonal transformation unit 506, the quantization unit 507, the multiplexing unit 508, the inverse quantization unit 509, the inverse orthogonal transformation unit 510, and the adder 511.

The memory 501 temporally stores pictures filtered by the filter 512. Pictures reconstructed based on the filtered pictures include a picture for reference and a picture for output (also referred to as a picture for display). The picture for reference is referred to by the inter-picture prediction unit 502 as well as the intra-picture prediction unit 503 and then outputted according to a display order. The picture for output, on the other hand, is a picture to be outputted according to the display order and is not referred to. The "output" here means an output of a picture to be displayed on an external display device, but the picture shall be neither necessarily displayed by the picture coding apparatus 500 nor outputted outside. For example, a picture is displayed when monitored by the display device simultaneously at the time of coding. In other cases, however, the picture is not displayed.

The following describes an alignment of pictures showing reference relations between pictures used for prediction and an operation of storing pictures in the memory 501.

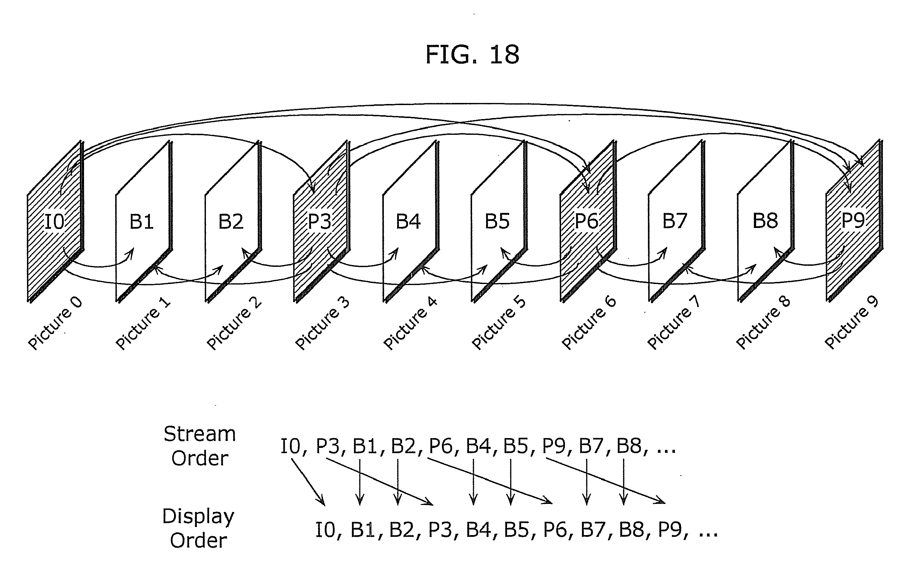

FIG. 18 shows the first example of the picture alignment for prediction. The picture 0 ∼ 9 shown in the diagram is a frame or a field included in a moving picture shown in display order. I, B, and P in the diagram indicate respectively a picture type. I is an intra-picture (I-picture) that is intra-picture predictive coded. B is a bi-predictive coded picture (B-picture), referring to plural reconstructed pictures stored in the memory 501. P is a predictive coded picture, referring to a single reconstructed picture stored in the memory 501. The hatched pictures are the pictures which can be referred to as reference pictures in the inter-picture predictive coding while the pictures without hatchings are the pictures which are not used for reference. The picture alignment for prediction used in the first example is a repetition of IBBPBBPBBP as shown in the upper part of the diagram.

The arrows indicate reference relations used in the inter-picture predictive coding. For example, a reference picture for a picture P3 is a picture 10 while reference pictures for a picture P6 are the pictures 10 and P3.

According to such reference relations, the display order of the pictures differs from the coding order (i.e., an order of pictures in the stream). The lower part in the diagram shows a correlation between the pictures arrayed in display order and those arrayed in coding order (stream order). As shown in the diagram, the picture coding apparatus rearranges the pictures in display order to the pictures in coding order according to the picture alignment for prediction.

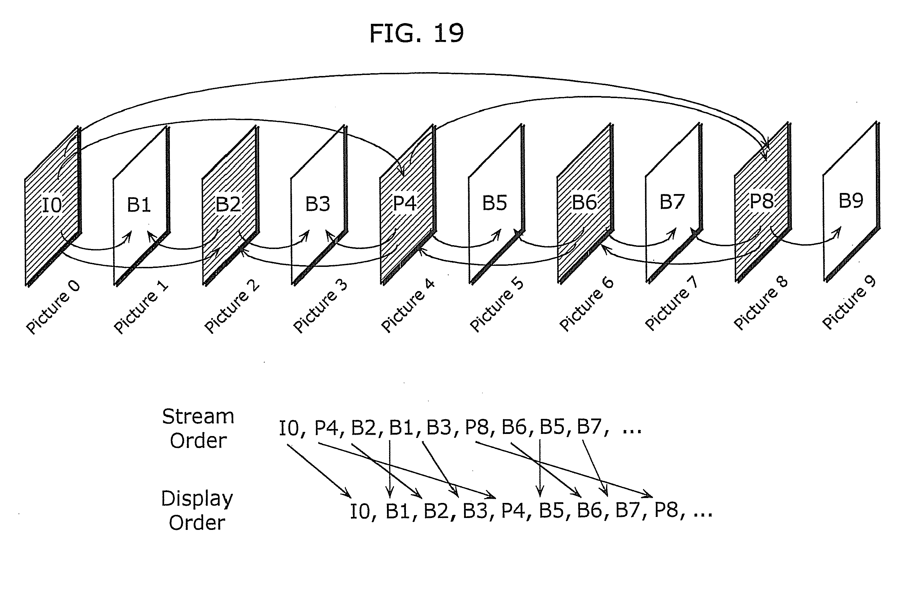

FIG. 19 shows the second example of the picture alignment for prediction. The picture alignment for prediction employed in the second example shown in the diagram is a repetition of IBBBPBBBP. The difference between the first and second examples is that B-pictures can be used as reference pictures in the second example. That is to say, pictures B2 and B6 can be used as reference pictures besides pictures 10, P4 and P8. The pictures B2 and B6 are to be stored in the memory 501 as reference pictures.

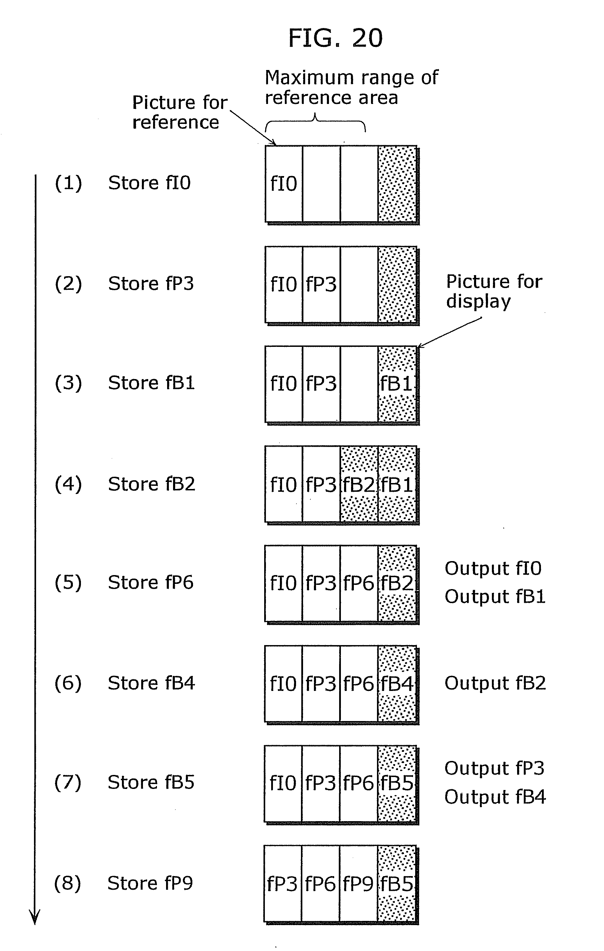

FIG. 20 shows how the pictures are stored in the memory 501 when the picture coding apparatus 500 codes the pictures using the picture alignment for prediction employed in the first example. The memory 501 has four memory areas for storing four pictures in the diagram. A maximum of three reference pictures are stored in the four memory areas. A maximum of three memory areas presently storing reference pictures are called reference area whereas a memory area presently storing a picture for output is called a display area. In the diagram, fI0, fP3, fB1, and the like, which are the picture names corresponding to the pictures in FIG. 18, are the pictures which have been filtered. The unhatched area indicates a memory area in the state of being released, the hatched areas with picture names indicate pictures for output (display) and the unhatched areas with picture names indicate pictures for reference. (1) ∼ (8) corresponds to the pictures coded and decoded (reconstructed) based on the coding order shown in FIG. 18. When an empty area is not found, a new picture is stored, if any, in an area holding an already displayed picture. When such area is not found, a picture which is not displayed yet is displayed in display order so that a new picture is stored in the area holding such displayed picture. When reference pictures are stored the maximum number of pictures in the reference area, a picture for reference stored at the earliest time within the reference area is changed into a picture for display so that the area is allocated in order to store a new picture.

As shown in FIG. 20, (1) ∼ (4) show that the pictures fI0, fP3, fB1 and fB2 are respectively reconstructed and stored in the memory 501. In (5), the picture fP6 is reconstructed. In order to allocate an area for storing the picture fP6, the pictures fI0 and fB1 are sequentially outputted from the memory 501 so that the picture fP6 is stored (overwritten) in the memory area for the picture fB1 that is already displayed. In (6), the picture fB4 is reconstructed. The picture fB2 is then outputted from the memory 501 so that the picture fB4 is stored in the memory area for the picture fB2 that is already displayed. In (7), the picture fB5 is reconstructed. Then, the pictures fP3 and fB4 are sequentially outputted from the memory 501 so that the picture fB5 is stored in the memory area for the picture fB4 that is already displayed. In (8), the picture fP9 is reconstructed. The picture fP9 is stored in the memory area for the picture fI0 being already displayed. This is because the picture I0 has already been displayed and therefore is changed from a picture for reference to a picture for display.

In this way, not only reference pictures but also output pictures are stored in the memory 501. When the stored reference picture is outputted and is no longer referred to, the memory area holding the reference picture is used to store a new picture. When an output picture is outputted, the memory area holding the output picture is used to store a new picture.

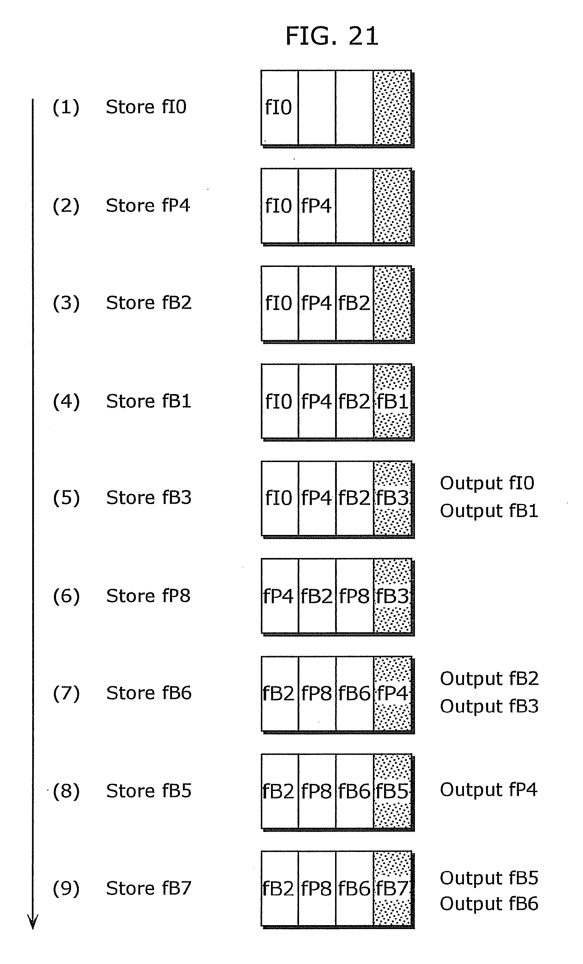

FIG. 21 shows how the pictures are stored in the memory 501 when the picture coding apparatus 500 codes the pictures using the picture alignment for prediction employed in the second example. As shown in the diagram, (1) ∼ (4) show that the pictures fI0, fP4, fB2 and fB1 are respectively reconstructed. These reconstructed pictures are sequentially stored in the memory 501. In (5), the picture fB3 is reconstructed. The pictures fI0 and fB1 are sequentially outputted from the memory 501 so that the reconstructed picture fB3 is stored in the memory area which presently stores the picture fB1 that is already displayed. In (6), the picture fP8 is reconstructed. The picture fP8 is changed into a picture for display and stored in the memory area which presently stores the picture fI0 that is already displayed. In (7), the picture fB6 is reconstructed. The reference picture fP4 is changed into a picture for display because the reference pictures are stored at maximum. The pictures fB2 and fB3 are then outputted from the memory 501 so that the picture fP4, which has become a picture for display, is stored in the position of the picture fB3. The picture fB6 is stored in the reference area. In (8), the picture fB5 is reconstructed. The picture fP4 is then outputted so that the picture fB5 is stored in the memory area which presently stores the picture fP4. In (9), the picture fB7 is reconstructed. The picture fB5 is then outputted from the memory 501 so that the picture fB7 is stored in the memory area which presently stores the picture fB5, and the picture fB6 is outputted.

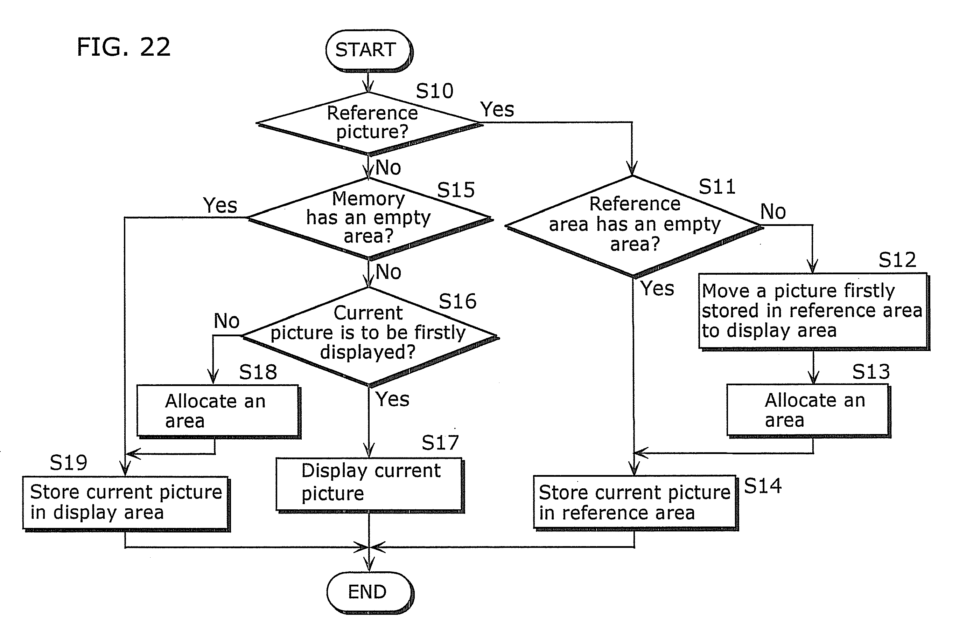

FIG. 22 is a flowchart showing a memory management operated by the picture coding apparatus 500 for storing and outputting pictures in the memory 501.

As shown in the diagram, the picture coding apparatus 500 judges whether or not a reconstructed picture (to be referred to as a current picture hereinafter) is a reference picture (S10).

When judging that the current picture is a reference picture, the picture coding apparatus 500 judges whether or not the reference area has an empty area for storing a picture (S11) and when no free space is found, the picture firstly stored in the reference area is moved to a display area (S12). This move is explained as a case of the picture fP4 shown in (7) in FIG. 21. The "move" here means to change an attribute of the memory area from "for reference" to "for display", without transferring the picture between the memory areas. The picture coding apparatus 500 performs an area allocation processing for allocating a memory area (S13) and stores the current picture in the allocated memory area as a reference picture (S14). When judging that an empty area is found in S11, the picture coding apparatus 500 stores the current picture in the empty area as a reference picture.

On the other hand, when judging that the current picture is not a reference picture in S10, the picture coding apparatus 500 judges whether or not the memory has an empty area (S15). When judging that no empty area is found, the picture coding apparatus 500 judges whether the current picture is a picture to be firstly outputted (displayed) (S16). When judging that the current picture is a picture to be firstly outputted, the picture coding apparatus 500 does not store but outputs (displays) the current picture (S17), and when judging that the current picture is not a picture to be firstly outputted, the picture coding apparatus 500 performs the area allocation processing (S18). Either after allocating the area in S18 or after judging that an empty area is found in S15, the picture coding apparatus 500 stores the current picture in the area (S19).

Thus, the picture coding apparatus 500 stores the picture reconstructed after filtering in the memory 501, either as a reference picture or as a picture for output so as to output it for display.

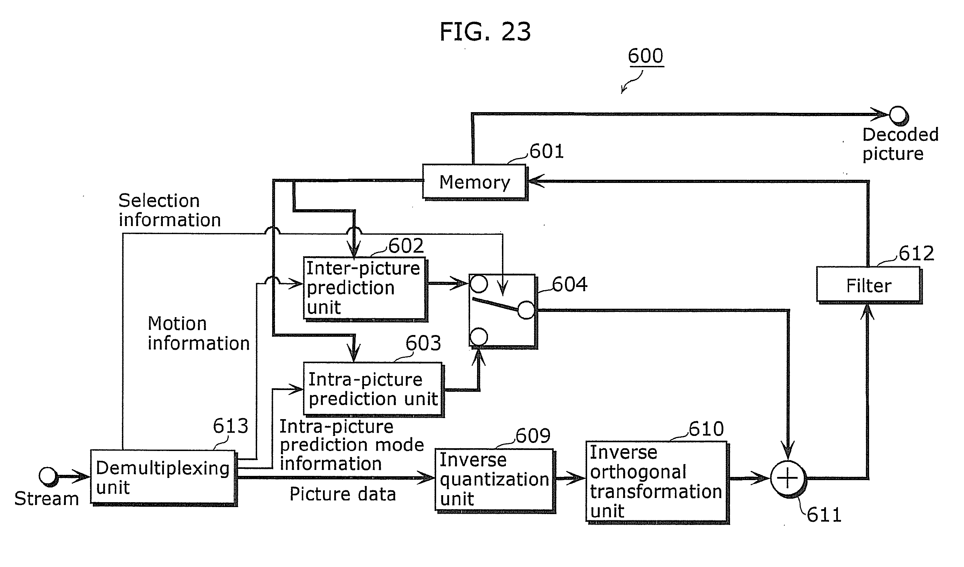

FIG. 23 is a block diagram showing a structure of the conventional picture decoding apparatus. The picture decoding apparatus 600 in the diagram includes a memory 601, an inter-picture prediction unit 602, an intra-picture prediction unit 603, a switch 604, an inverse quantization unit 609, an inverse orthogonal transformation unit 610, an adder 611, a filter 612 and a demultiplexing unit 613. The demultiplexing unit 613 demultiplexes a stream into motion information, intra-picture prediction mode information, a picture bit stream and others. The inter-picture prediction unit 602 generates a predictive picture using inter-picture prediction based on the motion information. The intra-picture prediction unit 603 generates a predictive picture using intra-picture prediction based on the intra-picture prediction mode information. The switch 604, the inverse quantization unit 609, the inverse orthogonal transformation unit 610, the adder 611 and the filter 612 respectively have the same function as the respective components with the same name shown in FIG. 17.
The decoding performed by the picture decoding apparatus 600 is as same as the decoding (i.e., reconstruction of the picture) performed by the picture coding apparatus 500.

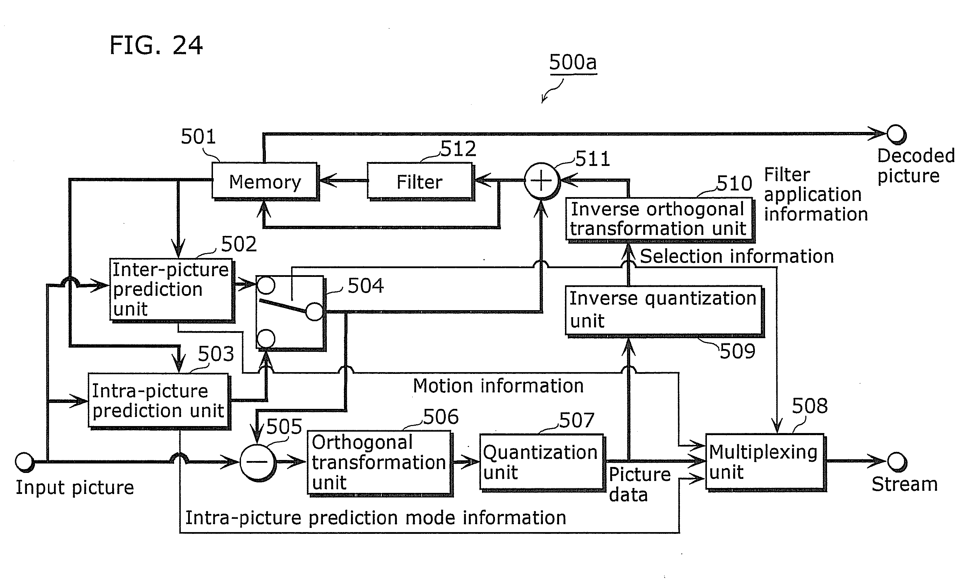

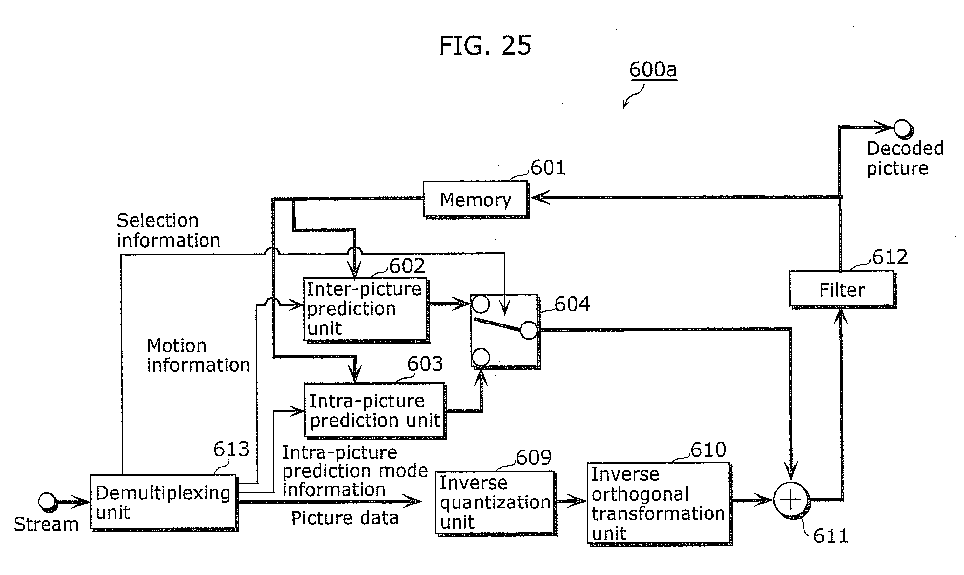

The picture coding apparatus 500 and the picture decoding apparatus 600 are thus structured for the case in which the pictures in coding order are rearranged in display order as shown in the picture alignments for prediction shown in FIGS. 18 and 19. For a case of using the picture alignment for prediction without such rearrangement, the structure of the conventional picture coding apparatus is as shown in FIG. 24 while the structure of the conventional picture decoding apparatus is as shown in FIG. 25. The picture coding apparatus 500a in FIG. 24 and the picture decoding apparatus 600a in FIG. 25, in comparison with FIGS. 17 and 23 differ in the respect that they output pictures from the filters 512 and 612 instead of the memories 501 and 601. The respective memories 501 and 601 store only reference pictures but not pictures for display since the rearrangement of pictures is not required in this case.

Such picture coding apparatus and the picture decoding apparatus in the prior art reduce the block noise for all the pictures by means of filtering. In addition, they improve the quality of pictures as well as the coding efficiency as the block noise is reduced also for reference pictures.

However, the related art has contained a problem of degrading the quality unique to films produced as film grains, when the material of pictures is film. This is because the film grains, appearing in a picture signal as a special signal component which has few spatio-temporal correlations between the pictures, are removed by a loop filter.

The picture coding apparatus without a loop filter as in MPEG-2 degrades coding efficiency (i.e., compression rate) when such film grains appear in the picture signal.

### Disclosure of Invention

An aim of the present invention is to provide a picture coding method and a picture decoding method for efficient coding without impairing the quality of pictures in the case of films.

In order to achieve the above object, the picture coding method according to the present invention for predictively coding a picture with reference to pictures obtained from pictures coded and decoded, the method comprising: a filtering step of performing filtering processing on a decoded picture, a first determination step of determining a filtered picture as a reference picture, out of two pictures: a filtered picture and an unfiltered picture, said filtered picture being a filtered decoded picture and said unfiltered picture being said decoded picture; and a second determination step of determining an unfiltered picture as an output picture out of the two pictures.

The picture coding method further comprises a first storage step of storing the filtered picture in a memory as a reference picture; and a second storage step of storing the unfiltered picture in the memory as an output picture.

With the structure described above, the film grains are reduced for reference pictures so that coding efficiency is improved while the film grains are left for output pictures so that the quality of films is not degraded.

The picture coding method may further comprise a releasing step of releasing a memory area storing a reference picture which is no longer used for reference, said reference picture being one of the reference pictures stored in the memory.

In the releasing step, when a reference picture becomes a picture which is no longer used for reference, an area storing the reference picture is released, said reference picture being one of the reference pictures stored in the memory.

In the releasing step, when a reference picture becomes a picture which is no longer used for reference, an area storing the reference picture is released in a case in which an output picture is already outputted, said reference picture being one of the reference pictures stored in the memory, and said reference picture and output picture being originated from one decoded picture.

The picture coding method may further comprise a coding step of coding identification information indicating which of the unfiltered picture and the filtered picture is to be determined as an output picture.

With the structure as described above, the picture decoding apparatus can switch the picture either before or after the filtering into a picture for output by coding identification information depending on, for example, whether or not the material of pictures is film. As a result, pictures can be displayed with optimal quality according to the material.

The picture coding method and the picture decoding method used in the present invention have effects in coding pictures such as a film effectively without taking away the quality of such pictures. Also, the picture can be displayed with optimal quality depending on the material of the picture.

As for the picture coding apparatus, the picture decoding apparatus, the program and the stream according to the present invention, the descriptions are abbreviated as they respectively have the same structures, operations and effects as the method described above.

For further information about technical background to this application, Provisional Application No. 60/449209 filed on February 21, 2003, United States Application No. 10/724, 317 filed on November 26, 2003, and Japanese Patent Application No. 2003-398981 filed on November 28, 2003, are incorporated herein by reference.

### Brief Description of Drawings

These and other objects, advantages and features of the invention will become apparent from the following description thereof taken in conjunction with the accompanying drawings that illustrate a specific embodiment of the invention. In the Drawings:
FIG. 1 is a block diagram showing the structure of the picture coding apparatus according to a first embodiment;
FIG. 2 shows how pictures are stored in a memory when the pictures are coded using the picture alignment for prediction employed in the first example;
FIG. 3 shows how the pictures are stored in the memory when the pictures are coded using the picture alignment for prediction employed in the second example;
FIG. 4 shows how the pictures are stored in the memory when the pictures are coded using the picture alignment for prediction employed in the second example;
FIG. 5 is a flowchart showing a first memory management processing for storing and outputting the pictures in and from the memory;
FIG. 6 is a flowchart showing an area allocation processing;
FIG. 7 is a flowchart showing a second memory management processing for storing and outputting the pictures in and from the memory;
FIG. 8 is a block diagram showing the structure of the picture decoding apparatus according to the first embodiment;
FIG. 9 is a block diagram showing the structure of the picture coding apparatus according to the second embodiment;
FIG. 10 is a block diagram showing the structure of the picture decoding apparatus according to the second embodiment;
FIG. 11 is a table showing one example of filter application information;
FIGS. 12A∼12C are illustrations showing a storage medium for storing a program;
FIG. 13 is a block diagram showing an overall configuration of a content supply system;
FIG. 14 is a block diagram showing a structure of the cell phone;
FIG. 15 is an outer view of a cell phone;
FIG. 16 is a diagram showing one example of a digital broadcasting system;
FIG. 17 is a block diagram showing the structure of the conventional picture coding apparatus equipped with a loop filter;
FIG. 18 shows a first example of a picture alignment for prediction;
FIG. 19 shows a second example of the picture alignment for prediction;
FIG. 20 shows how the pictures are stored in the memory when the conventional picture coding apparatus codes the pictures using the picture alignment for prediction employed in the first example;
FIG. 21 shows how the pictures are stored in the memory when the conventional picture coding apparatus codes the pictures using the picture alignment for prediction employed in the second example;
FIG. 22 is a flowchart showing the conventional memory management for storing and outputting the picture in the memory;
FIG. 23 is a block diagram showing the structure of the conventional picture decoding apparatus;
FIG. 24 is a block diagram showing the structure of the conventional picture coding apparatus which does not rearrange the pictures;
FIG. 25 is a block diagram showing the structure of the conventional picture decoding apparatus which does not rearrange the pictures.

### Best Mode for Carrying Out the Invention

### (First Embodiment)

### <Structure of Picture Coding Apparatus 100>

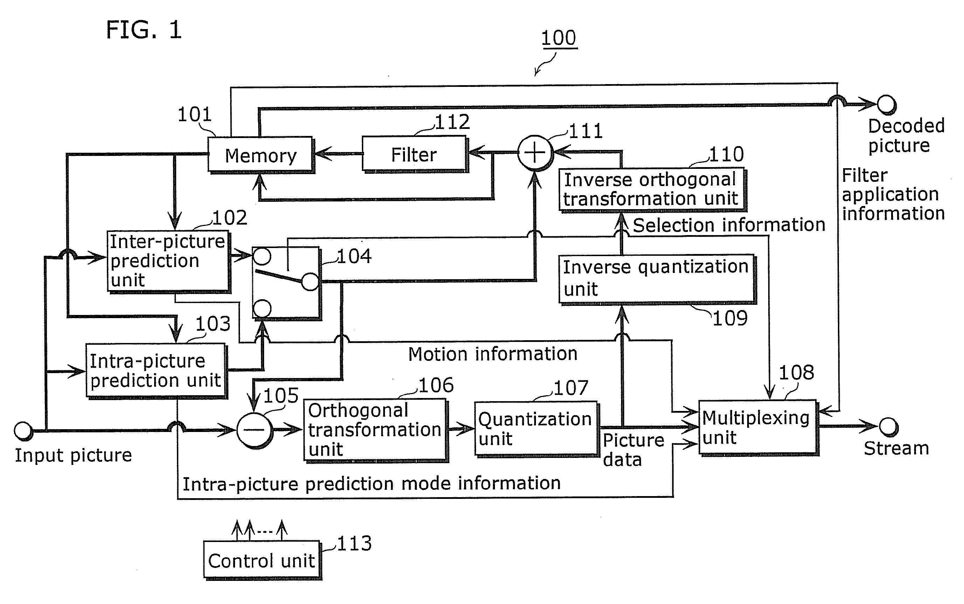

FIG. 1 is a block diagram showing the structure of the picture coding apparatus according to the first embodiment of the present invention. As shown in the diagram, the picture coding apparatus 100 is composed of a memory 101, an inter-picture prediction unit 102, an intra-picture prediction unit 103, a switch 104, a subtracter 105, an orthogonal transformation unit 106, a quantization unit 107, a multiplexing unit 108, an inverse quantization unit 109, an inverse orthogonal transformation unit 110, an adder 111, a filter 112 and a control unit 113.

The memory 101 stores pictures both unfiltered and filtered by the filter 112. The pictures filtered by the filter 112 are used as reference pictures while the pictures that are not filtered are used as output pictures. The film grains are reduced for the reference pictures so that coding efficiency is improved. The film grains are left for the output pictures so that the quality of films is not degraded.

The inter-picture prediction unit 102 generates a predictive picture based on inter-picture prediction. That is to say, the inter-picture prediction unit 102 estimates a motion vector with reference to a reference picture stored in the memory 101 in units of blocks included in a current picture to be coded and generates a predictive picture based on the reference picture according to the motion vector. In this case, the inter-picture prediction unit 102 uses a single reference picture when the current picture is a P-picture and uses two reference pictures when the current picture is a B-picture.

The intra-picture coding unit 103 generates a predictive picture based on intra-picture prediction. That is to say, the intra-picture prediction unit 103 generates a predictive picture in units of blocks included in the current picture, an I-picture. In this case, the intra-picture prediction unit 103 refers to the pixels in the I-picture that is already decoded and stored in the memory 101.

When the current picture is either a P-picture or a B-picture, the switch 104 connects either to the side of the inter-picture prediction unit 102 or to the side of the intra-picture prediction unit 103, whichever having the smaller prediction error. When the current picture is an I-picture, the switch 104 connects to the side of the intra-picture prediction unit 103.

The subtracter 105 subtracts each of the pixel values in a current block to be coded from each of the pixel values in the predictive picture inputted either from the inter-picture prediction unit 102 or the intra-picture prediction unit 103 via the switch 104. The result obtained from the subtraction is called a prediction error.

The orthogonal transformation unit 106 performs orthogonal transformation to the prediction error outputted from the subtracter 105. The result obtained from the orthogonal transformation is called a coefficient block.

The quantization unit 107 quantizes the coefficient block outputted from the orthogonal transformation unit 106. The result obtained from the quantization is called a quantized coefficient block.

The multiplexing unit 108 variable length codes the quantized coefficient block outputted from the quantization unit 107 and further codes, as a stream, the variable length codes, the motion vector information indicating the motion vectors estimated by the inter-picture prediction unit 102, the intra-picture prediction mode information outputted from the intra-picture prediction unit 103, selection information indicating the switching operated by the switch 104, the filter application information relating to the picture to be stored in the memory 101, and others.

The inverse quantization unit 109 inverse quantizes the quantized coefficient block outputted from the quantization unit 107 to obtain a coefficient block.

The inverse orthogonal transformation unit 110 performs inverse orthogonal transformation on the coefficient block outputted from the inverse quantization unit 109 to obtain a prediction error.

The adder 111 adds each of the pixel values in the prediction error outputted from the inverse orthogonal transformation unit 110 to each of the pixel values of the predictive image inputted either from the inter-picture prediction unit 102 and the intra-picture prediction unit 103 via the switch 104. The result of the addition is a decoded block generated for the current block. The picture to which the filter is not applied is reconstructed by storing sequentially such decoded blocks in the memory 101.

The filter 112 performs filtering in order to reduce the block noise in the decoded block outputted from the adder 111. For example, the filter 112 performs filtering both in horizontal and vertical directions (e.g., the number of taps is several like 9 up to more than 10), for the pixels in the border of the decoded block outputted from the adder 111, using the pixel values in the decoded block which is already stored in the memory 101. The picture to which the filter is applied is thus reconstructed.

The control unit 113 controls the picture coding apparatus 100 on the whole. The control unit 113 controls particularly to store and output both the filtered and unfiltered pictures in and from the memory 101.

### <First Example of Storing Pictures in the Memory 101>

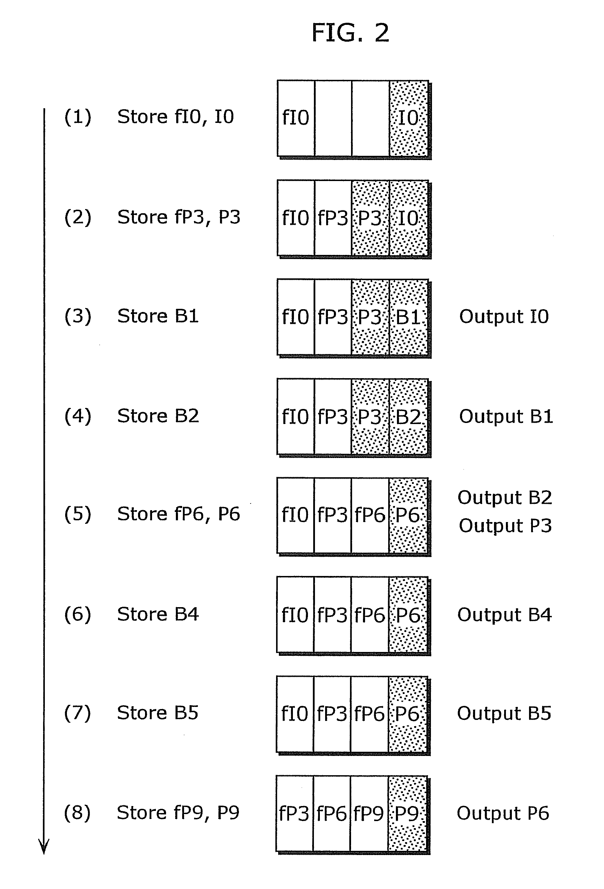

FIG. 2 shows how the pictures are stored in the memory 101 when the picture coding apparatus 100 codes the pictures using the picture alignment for prediction employed in the first example shown in FIG. 18. In the diagram, the memory 101 has four memory areas for storing four pictures. The four memory areas are used for storing a maximum of three reference pictures. A maximum of three memory areas presently storing reference pictures are called a reference area while a memory area presently storing a picture for output is called a display area. The reference area and the display area are not physically fixed and are classified according to an attribute of each of the memory areas. The attribute indicates whether a stored picture is for reference or for output. In the diagram, the fI0, fP3, fB1 and the like indicate the pictures to which the filter is applied and the I0, P3, B1 and the like indicate the pictures to which the filter is not applied. An unhatched memory area indicates the reference area while a hatched memory area indicates the display area. (1) ∼ (8) correspond respectively to the pictures coded/decoded (i.e., reconstructed) based on the coding order shown in FIG. 18.

In (1) of FIG. 2, the filtered picture fI0 and the unfiltered picture 10 are respectively reconstructed based on the output from the adder 111 and the filter 112. The unfiltered picture I0 is stored in the display area while the filtered picture fI0 is stored in the reference area.

In (2), the filtered picture fP3 and the unfiltered picture P3 are respectively reconstructed. The unfiltered picture P3 is stored in the display area while the filtered picture fP3 is stored in the reference area.

In (3), the unfiltered picture B1 is reconstructed. This picture is not a reference picture. The filtered picture fB1 is therefore not reconstructed. Firstly, the unfiltered picture 10 stored in the display area is outputted so that the area is released. The unfiltered picture B1 is then stored in the display area from which the picture 10 is released.

In (4), the unfiltered picture B2 is reconstructed. This picture is not a reference picture, therefore, the filtered picture fB2 is not reconstructed. Firstly, the unfiltered picture B1 is outputted from the display area so that the area is released. The unfiltered picture B2 is then stored in the display area from which the picture B1 is released.

In (5), the filtered picture fP6 and the unfiltered picture P6 are respectively reconstructed. Firstly, the unfiltered pictures B2 and P3 are sequentially outputted from the display area so that the areas are released. The unfiltered picture P6 is then stored in the released display area while the filtered picture fP6 is stored in the released reference area. Namely, the maximum number of pictures in the reference area is three while the number of pictures in the display area is one.

In (6), the unfiltered picture B4 is reconstructed. This picture is not a reference picture. The filtered picture fB4 is therefore not reconstructed. The reconstructed picture (B4) is not stored in the memory 101 but outputted.

In (7), the unfiltered picture B5 is reconstructed. This picture is not a reference picture. The filtered picture fB5 is therefore not reconstructed. The reconstructed picture (B5) is not stored in the memory 101 but outputted.

In (8), the filtered picture fP9 and the unfiltered picture P9 are respectively reconstructed. Firstly, the unfiltered picture P6 is outputted from the display area so that the area is released. The unfiltered picture P9 is then stored in the released display area while the filtered picture fP9 is stored in the reference area.

Thus, the picture coding apparatus 100 stores the filtered picture in the reference area as a reference picture and stores the unfiltered picture in the display area as a picture for output. Moreover, in the case of using the picture alignment for prediction employed in the first example (see FIG. 18), as for the memory area including both reference area and display area, the memory area capable of storing four pictures is sufficient.

### <Second Example of Storing Pictures in the Memory 101>

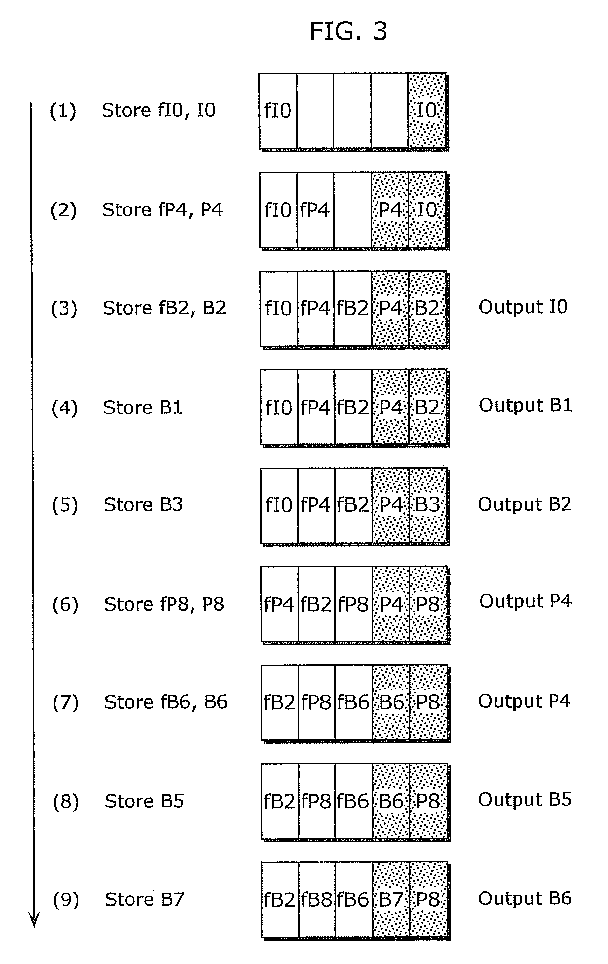

FIG. 3 shows how the pictures are stored in the memory 101 when the picture coding apparatus 100 codes the pictures using the picture alignment for prediction employed in the second example shown in FIG. 19. In the diagram, the memory 101 has five memory areas for five pictures. The five memory areas are used to store a maximum of three reference pictures.

In (1) of FIG. 3, the filtered picture fI0 and the unfiltered picture 10 are respectively reconstructed based on the output from the adder 111 and the filter 112. The unfiltered picture 10 is stored in the display area while the filtered picture fI0 is stored in the reference area.

In (2), the filtered picture fP4 and the unfiltered picture P4 are respectively reconstructed. The unfiltered picture P4 is stored in the display area while the filtered picture fP4 is stored in the reference area.

In (3), the filtered picture fB2 and the unfiltered picture B2 are respectively reconstructed. Firstly, the unfiltered picture 10 is outputted so that the area is released. The unfiltered picture B2 is then stored in the display area while the filtered picture fB2 is stored in the reference area.

In (4), the unfiltered picture B1 is reconstructed. This picture is not a reference picture. The filtered picture fB1 is therefore not reconstructed. The reconstructed picture B1 is not stored in the memory 101 but outputted.

In (5), the unfiltered picture B3 is reconstructed. This picture is not a reference picture. The filtered picture fB3 is therefore not reconstructed. Firstly, the unfiltered picture B2 is outputted from the display area. The unfiltered picture B3 is then stored in the display area.

In (6), the filtered picture fP8 and the unfiltered picture P8 are respectively reconstructed. Firstly, the picture fI0 in the reference area is released (since the picture 10 is already displayed) and then the unfiltered picture B3 is outputted from the display area so that the area is released. The areas equivalent to two pictures are released so that the unfiltered picture P8 is stored in the display area while the filtered picture fP8 is stored in the reference area.

In (7), the filtered picture fB6 and the unfiltered picture B6 are respectively reconstructed. Firstly, the picture fP4 in the reference area is released (since the picture P4 is in the display area) and then the unfiltered picture P4 is released from the display area so that the area is released. The unfiltered picture B6 is then stored in the released display area while the filtered picture fB6 is stored in the reference area.

In (8), the unfiltered picture B5 is reconstructed. This picture is not a reference picture. The filtered picture fB5 is therefore not reconstructed. The reconstructed picture B5 is not stored in the memory 101 but outputted.

In (9), the unfiltered picture B7 is reconstructed. This picture is not a reference picture. The filtered picture fB7 is therefore not reconstructed. Firstly, the unfiltered picture B6 is outputted from the display area so that the area is released. The unfiltered picture B7 is then stored in the display area.

Thus, the picture coding apparatus 100 stores the filtered picture in the reference area as a reference picture and stores the unfiltered picture in the display area as a picture for output. Moreover, in the case of using the picture alignment for prediction employed in the second example shown in FIG. 19, as for the memory areas including both the reference area and the display area, the memory area capable of storing five pictures is sufficient.

### <Third Example of Storing Pictures in the Memory 101>

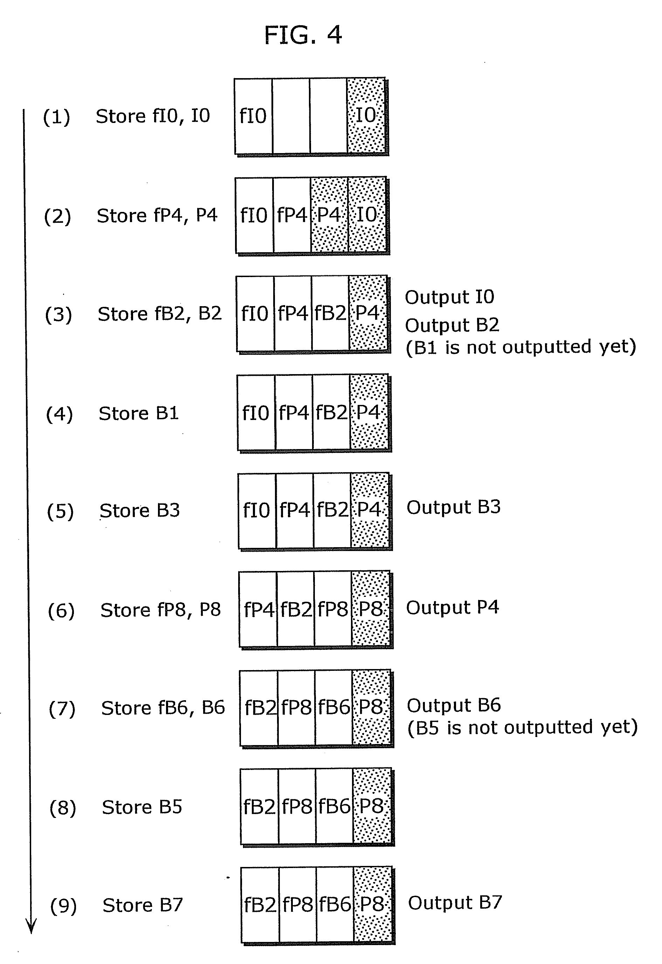

FIG. 4 shows how the pictures are stored in the memory 101 when the picture coding apparatus 100 codes the pictures using the picture alignment for prediction employed in the second example shown in FIG. 19. In the diagram, the memory 101 uses four memory areas instead of five, which is different from the second example as described above. The similarity is that the maximum number of memory areas in the reference area is three. In this case, a case of lacking the display area may occur since the memory 101 has fewer memory areas. As a result, some decoded pictures may not be outputted. This is a disadvantage of the picture coding apparatus 100, but an advantage is that all the pictures can be coded properly using fewer memory areas.

In (1) of FIG. 4, the filtered picture fI0 and the unfiltered picture I0 are respectively reconstructed based on the output from the adder 111 and the filter 112. The unfiltered picture I0 is stored in the display area while the filtered picture fI0 is stored in the reference area.

In (2), the filtered picture fP4 and the unfiltered picture P4 are respectively reconstructed. The unfiltered picture P4 is stored in the display area while the filtered picture fP4 is stored in the reference area. The empty memory areas are getting fewer at this point in the third example, which is different from the second example.

In (3), the filtered picture fB2 and the unfiltered picture B2 are respectively reconstructed. The filtered picture fB2, being a reference picture, needs to be stored definitely. For this, the unfiltered picture 10 is outputted from the display area for release so that the picture fB2 is stored in the released area. However, the picture B2 cannot be stored at this point since there are no released areas, and the picture B1, which is the next picture to be displayed, is not yet reconstructed. Then, the reconstructed picture B2 is outputted, skipping the picture B1 that is to be displayed next.

In (4), the unfiltered picture B1 is reconstructed. This picture is not a reference picture. The filtered picture fB1 is therefore not reconstructed. Since no released areas are found at this point and the picture B2, whose position in display order is later than that of B1, is already outputted, the picture B1 is not stored.

In (5), the unfiltered picture B3 is reconstructed. This picture is not a reference picture. The filtered picture fB3 is therefore not reconstructed. The picture B2 to be displayed next is already displayed. The picture B3 is therefore outputted.

In (6), the filtered picture fP8 and the unfiltered picture P8 are respectively reconstructed. Firstly, the unfiltered picture P4 is outputted so that the area is released. The unfiltered picture P8 is stored in the display area while the picture 10 in the reference area is released (since the picture fI0 is already displayed) so that the filtered picture fP8 is stored in the released area in the reference area.

In (7), the filtered picture fB6 and the unfiltered picture B6 are respectively reconstructed. The filtered picture fB6, being a reference picture, needs to be stored definitely. The picture P8 whose position in display order is later than that of the picture B6 is stored in the display area so that the reconstructed picture B6 is outputted skipping the picture B5, the next picture to be displayed in display order. The picture fP4 in the reference area is released (since the picture P4 is already displayed) so that the picture fB6 is stored in the released area.

In (8), the unfiltered picture B5 is reconstructed. This picture is not a reference picture. The filtered picture fB5 is therefore not reconstructed. The picture B6 whose position in display order is later than that of the picture B5 is already outputted so that the reconstructed picture B5 is neither stored in the memory 101 nor outputted.

In (9), the unfiltered picture B7 is reconstructed. This picture is not a reference picture. The filtered picture fB7 is therefore not reconstructed. The unfiltered picture B7 is not stored in the memory 101 but outputted.

Thus, the picture coding apparatus 100 stores the filtered picture in the reference area as a reference picture and stores the unfiltered picture in the display area as a picture for output. The case of lacking the display area may occur since the memory 101 has fewer memory areas, compared to the second example. As a result, a part of the picture may not be outputted. This is a disadvantage of the picture coding apparatus 100, but an advantage is that all the pictures can be properly coded using fewer memory areas.

### <First Memory Management Processing>

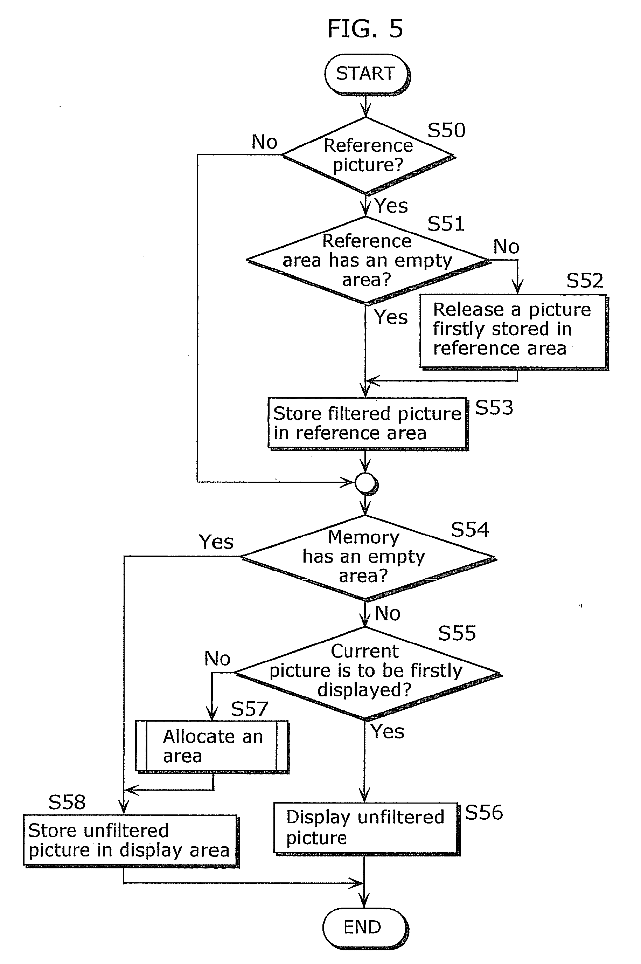

FIG. 5 is a flowchart showing the first memory management processing performed by the control unit 113 for storing and outputting pictures in and from the memory 101. It should be noted that either a filtered or an unfiltered picture immediately after being reconstructed is called a current picture.

As shown in the diagram, the control unit 113 firstly judges whether or not the current picture is a reference picture (S50).

When judging that the current picture is a reference picture, the control unit 113 judges whether the reference area has an empty area for storing the picture (S51). When judging that no empty area is found, the control unit 113 releases the picture which is firstly stored within the reference area (S52). Either after judging that an empty area is found in S51 or after judging that the picture is released in S52, the control unit 113 stores the filtered current picture as a reference picture, either into the empty area or into the released area (S53).

When judging that the current picture is not a reference picture in S50, the control unit 113 judges whether or not the memory area including both reference area and display area has an empty area (S54). When judging that the memory has no empty area, the control unit 113 judges whether or not the current picture is a picture to be firstly outputted (displayed) (S55). When judging the current picture is to be firstly outputted, the control unit 113 does not store the unfiltered current picture in the memory 101 but outputs it (S56) and when the current picture is not a picture to be firstly outputted, the control unit 113 performs processing to allocate an area (S57). After the allocation of an area in S57 or after the finding of an empty area in S54, the control unit 113 stores the unfiltered current picture accordingly either in the allocated area or in the empty area (S58).

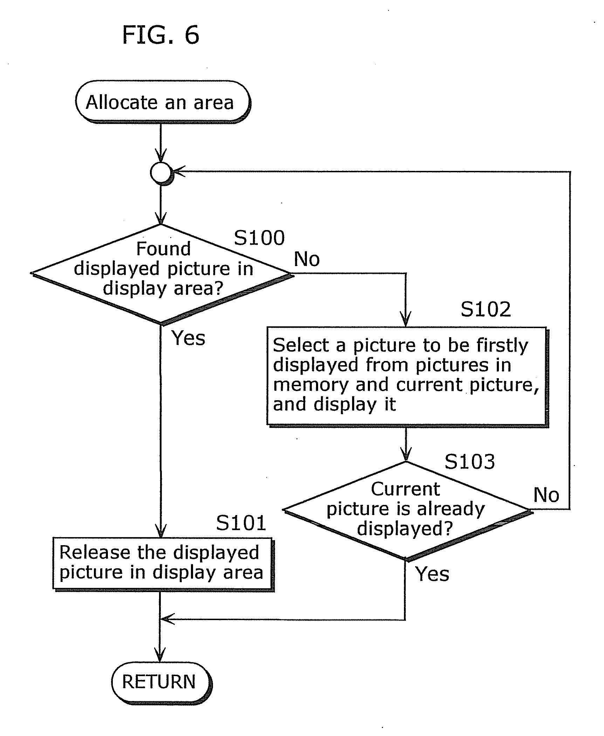

FIG. 6 is a flowchart showing in detail the processing to allocate an area as indicated in S 57 and S58. In the diagram, the control unit 113 judges whether or not the picture stored in the display area is already outputted (displayed) (S100). When judging that the picture is already outputted, the control unit 113 releases the memory area (S101). When judging that the picture is not outputted yet, the control unit 113 selects the picture to be firstly displayed out of the pictures stored in the memory 101 and the current picture, and outputs (displays) it (S102). The control unit 113 further judges whether or not the current picture is already outputted in S102 (S103) and terminates the processing when the current picture is already outputted but returns to S100 when the current picture is not displayed yet.

Thus, the control unit 113 stores the picture reconstructed after filtering as a reference picture and stores the picture reconstructed without filtering as a picture for output, respectively in the memory 101.

In the first memory management processing shown in FIGS. 5 and 6, the memory area is released once, at maximum, for a reference picture (a reconstructed picture which is filtered) and the memory area is released once, at maximum, for a picture for output (a reconstructed picture which is not filtered).

### <Second Memory Management Processing>

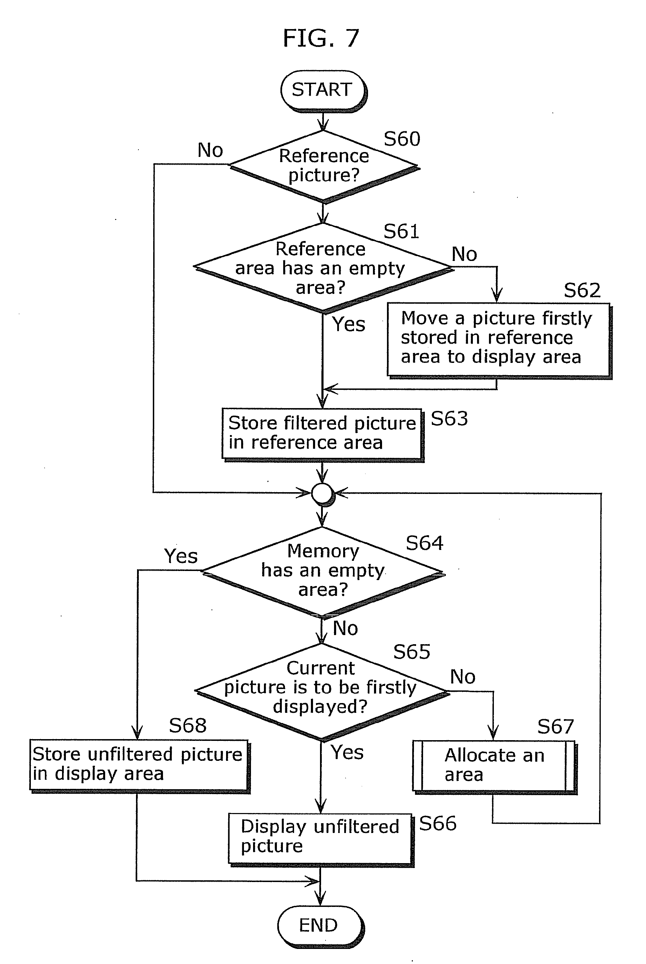

FIG. 7 is a flowchart showing the second memory management processing performed by the control unit 113 for storing and outputting pictures in and from the memory 101.

In the second memory management processing, the memory area is released once at maximum for a reference picture (a reconstructed picture which is filtered) as in the case of the first memory management processing. The difference, however, is that the memory area is released for twice at maximum for a picture for output (a reconstructed picture which is not filtered). Namely, the total number of releasing processing in the first memory management processing is two at maximum: one time for storing a reference picture and the other time for storing a picture for output. In the second memory management processing, however, the releasing processing is performed for storing only a picture for output. Therefore, S67 is activated for two times at maximum for allocating a maximum of two memory areas: one time for a reference picture and the other time for an output picture. Although the second memory management processing has a different flow regarding this aspect, the same result as shown in FIGS. 2∼4 can be obtained.

As shown in FIG. 7, the control unit 113 firstly judges whether or not the current picture is a reference picture (S60).

When judging that the current picture is a reference picture, the control unit 113 judges whether or not the reference area has an empty area (S61). When no empty area is found, the control unit 113 moves the picture that is firstly stored in the reference area (S62). The move here does not mean to transfer the picture between the memory areas but to change an attribute of the memory area from "for reference" to "for display".

Either after judging that an empty area is found in S60 or after the picture is moved in S62, the control unit 113 stores the filtered current picture as a reference picture, either into the empty area or into the free space generated by the move (S63).

When judging that the current picture is not a reference picture in S60, the control unit 113 judges whether or not the memory area, which includes the reference area and the display area, has an empty area (S64). When judging that no empty area is found, the control unit 113 judges whether or not the current picture is a picture to be firstly outputted (displayed) (S65). When judging that the current picture is to be firstly outputted, the control unit 113 stores the unfiltered current picture into the memory 101 and outputs (displays) it (S66). When judging that the current picture is not to be firstly outputted, the control unit 113 performs the processing to allocate an area (S67) and returns to S64. When judging that an empty area is found in S64, the control unit 113 stores the unfiltered current picture into the display area (S68).

The area allocation processing shown in S67 and S68 is as same as the one shown in the flowchart in FIG. 6.

### <Structure of Picture Decoding Apparatus>

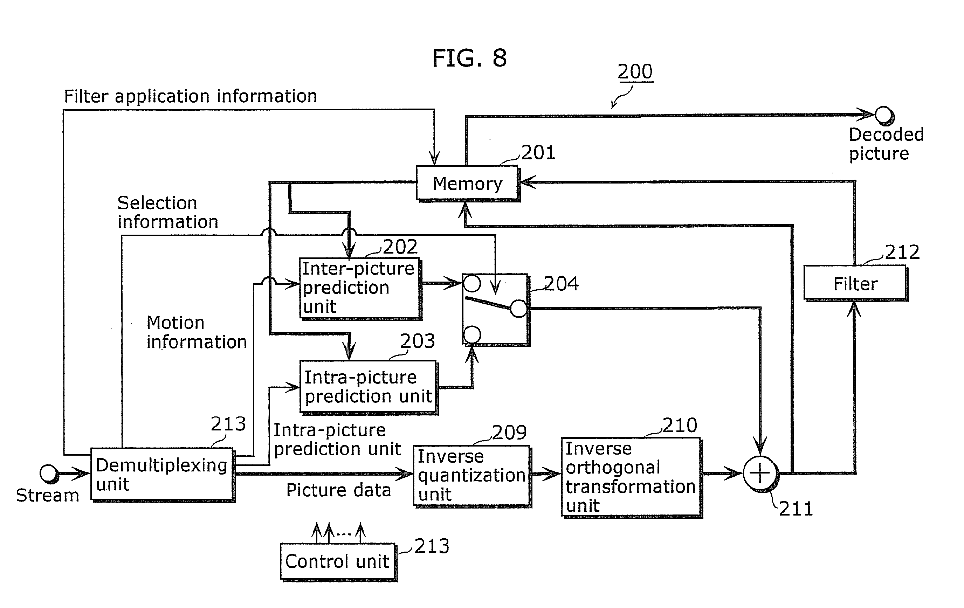

FIG. 8 is a block diagram showing the structure of the picture decoding apparatus according to the first embodiment of the present invention. The picture decoding apparatus 200 shown in the diagram is composed of a memory 201, an inter-picture prediction unit 202, an intra-picture prediction unit 203, a switch 204, an inverse quantization unit 209, an inverse orthogonal transformation unit 210, an adder 211, a filter 212 and a demultiplexing unit 213. The demultiplexing unit 213 demultiplexes motion information, intra-picture mode information, a picture bit stream, and others, from the stream. The inter-picture prediction unit 202 generates a predictive picture by means of inter-picture prediction based on the motion information while the intra-picture prediction unit 203 generates a predictive picture by means of intra-picture prediction based on the intra-picture prediction mode information. The switch 204, the inverse quantization unit 209, the inverse orthogonal transformation unit 210, the adder 211 and the filter 212 respectively have the same function as the respective components with the same names shown in FIG. 1. The decoding performed by the picture decoding apparatus 200 is as same as the decoding (reconstruction of a picture) performed by the picture coding apparatus 500.

As is described above, with the picture coding apparatus and the picture decoding apparatus according to the present embodiment, the filtered pictures are used as reference pictures while the unfiltered pictures are used as output pictures. The block noise and the film grains are reduced for the reference pictures so that coding efficiency can be enhanced. Moreover, the film grains are remained for the output pictures so that the quality of films is not impaired.

### (Second Embodiment)

The structures of the picture coding apparatus 100 and the picture decoding apparatus 200 according to the first embodiment are for the case in which the pictures are rearranged for display as seen in the picture alignments for prediction shown in FIGS. 18 and 19. The present embodiment describes the picture coding apparatus and the picture decoding apparatus for a case of using the picture alignment for prediction without such rearrangement.

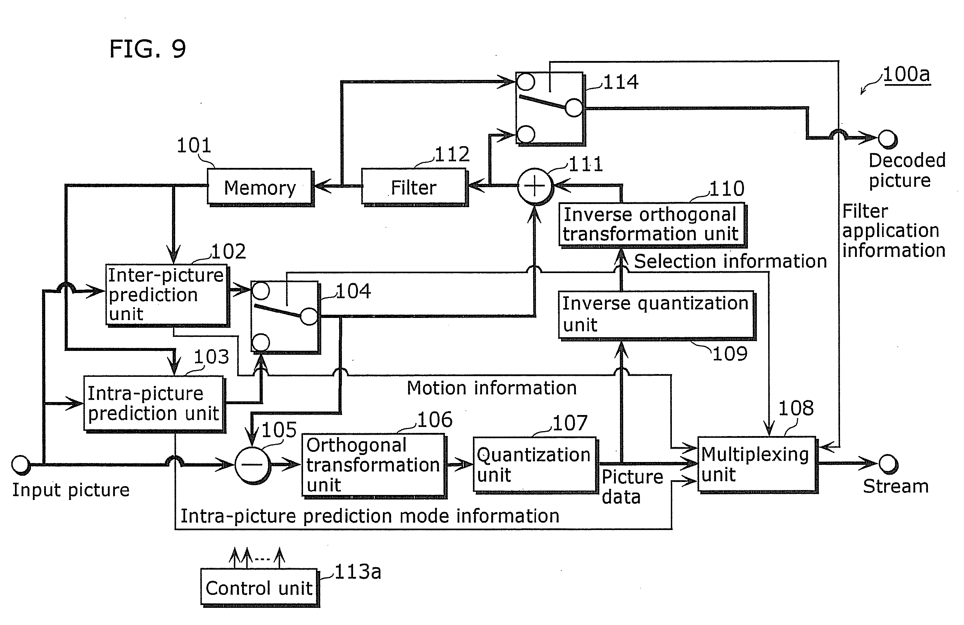

FIG. 9 is a block diagram showing the structure of the picture coding apparatus according to the present embodiment. The picture coding apparatus 100a in the diagram stores only filtered pictures instead of storing both filtered and unfiltered pictures in the memory 101 and has an additional switch 114, which are different from the picture coding apparatus 100 shown in FIG. 1. The following focuses on the differences while the description for the similar points is abbreviated here.

The memory 101 stores a filtered picture as a reference picture, but does not store an unfiltered picture.

The switch 114 receives a reconstructed picture (i.e., an unfiltered picture) from the adder 111 and a reconstructed picture (i.e., a filtered picture) from the filter 112 and outputs either of them selectively according to filter application information.

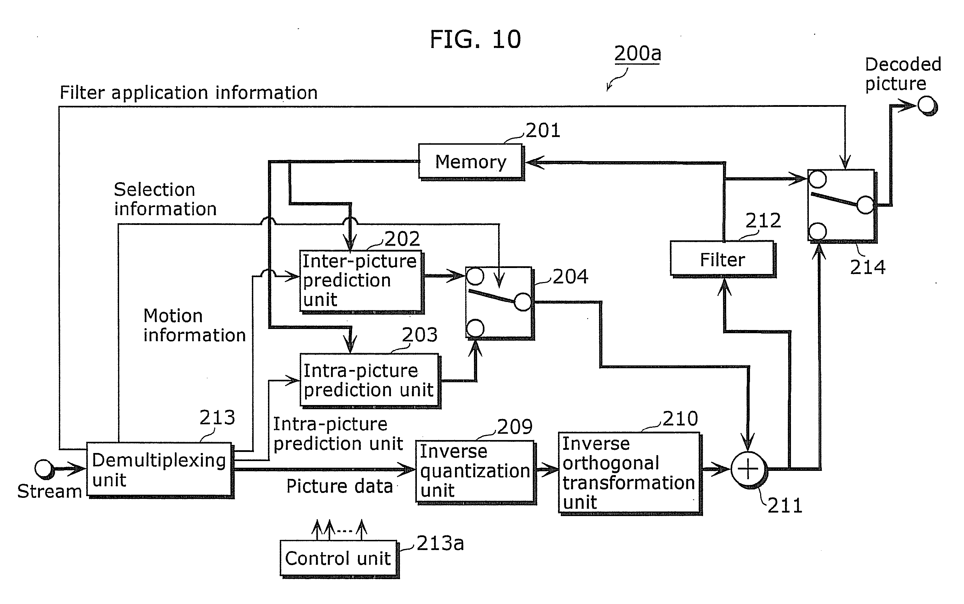

FIG. 10 is a block diagram showing the structure of the picture decoding apparatus according to the present embodiment. The picture decoding apparatus 200a in the diagram differs from the picture decoding apparatus 200 shown in FIG. 8 in the following respects: it stores only filtered pictures instead of both filtered and unfiltered pictures in the memory 201; and the switch 214 is added. The decoding performed by the picture decoding apparatus 200a is as same as the decoding (reconstructing) performed by the picture coding apparatus 100a so that the description is omitted here.

As is described above, with the picture coding apparatus 100a and the picture decoding apparatus 200a according to the present embodiment, the block noise and the film grains are reduced for the reference pictures since they are filtered so that coding efficiency is enhanced. In addition, the pictures can be outputted without degrading the quality of films in the case in which the material of pictures is film because the switches 114 and 214 select unfiltered pictures. When the material is something other than film, the switches 114 and 214 select a filtered picture so that a picture with less noise can be outputted and the optimal quality of the picture can be selected according to the material.

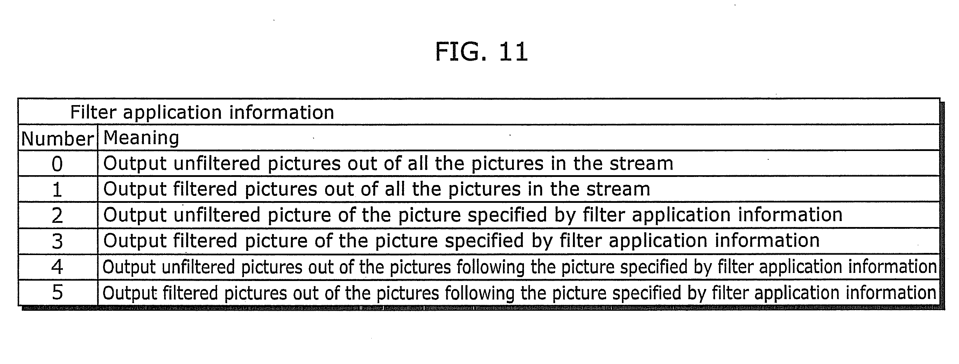

It should be noted that each of the above embodiments may have a structure for switching the pictures to be outputted according to the filter application information. An example of the filter application information in this case is shown in FIG. 11. In the diagram, the filter application information is presented by a number indicating which picture to be outputted, either filtered or unfiltered one. For example, the number "0" means that the unfiltered pictures out of all the pictures in the stream are outputted. The number "1" means to output the filtered pictures out of all the pictures in the stream. The number "2" means to output the unfiltered pictures out of the pictures specified by the filter application information. The number "3" means to output the filtered pictures out of the pictures specified by the filter application information. The number "4" means to output the unfiltered pictures out of the pictures following the picture specified by the filter application information. The number "5" means to output the filtered pictures out of the pictures following the picture specified by the filter application information. The filter application information is set for arbitrary pictures in the stream. For example, the filter application information can be set in SEI (Supplemental Enhancement Information) which is considered as additional information in MPEG-4AVC Standard.

It is explained in the each of the above embodiments that a reconstructed picture that is filtered is used as a reference picture and a reconstructed picture that is not filtered is used as an output picture. It may be switched between such method and the existing method in which the unfiltered reconstructed picture is used as a reference picture and the filtered reconstructed picture is used as an output picture, depending on a picture.

Namely, any of the following (1) ∼ (3) may be switched on a picture-by-picture basis.
(1) Storing two pictures: a filtered reconstructed picture as a reference picture; and an unfiltered reconstructed picture as an output picture.
(2) Storing one unfiltered reconstructed picture as a reference picture.
(3) Storing one filtered reconstructed picture as an output picture.

The flow shown in FIGS. 5 and 7 can be used without any changes for the memory management processing in this case.

Furthermore, it is also possible to assign codes corresponding to a display order of pictures like Picture Order Count (POC) to each of the pictures so that the flow shown in FIGS. 5 and 7 can be executed with the use of the POC. That is to say, the same POC is assigned to a reference picture that is a filtered reconstructed picture as well as to an output picture that is an unfiltered reconstructed picture, both of which are originated from one decoded picture. In this way, when the picture is moved from the reference area to the display area and the POC of the moved picture indicates a value smaller than the POC of the picture which has just been outputted, a picture in the reference area can be judged as "already displayed". It is also possible to judge on the picture to be released (i.e., whether or not a reference picture needs to be outputted) at the time of moving the picture from the reference area to the display area, by detecting whether or not the reference area and the display area have the picture with the same POC. It should be noted that the detection of the picture with the same POC within the reference and display areas can be realized by assigning unique numbers to the decoded pictures (however, when a filtered reconstructed picture is used as a reference picture and an unfiltered reconstructed picture is used as an output picture, the same numbers are assigned to both of the pictures). It is therefore possible to judge that a reference picture does not need to be outputted, when the same numbers are found at the time of moving the picture from the reference area to the display area.

### (Third Embodiment)

Furthermore, the processing illustrated in the above embodiment can be carried out easily in an independent computer system by recording a program for realizing the picture coding method described in the above embodiments onto a recording medium such as a flexible disk or the like.

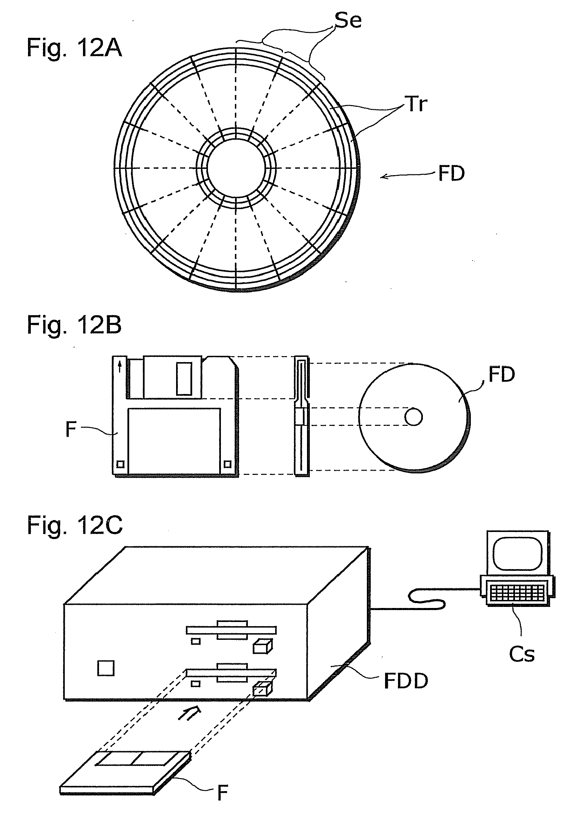

FIGS. 12A, 12B and 12C are illustrations of a recording medium, on which a program for carrying out the picture coding method described in the first and second embodiments in the computer system is recorded.

FIG. 12B shows a full appearance of a flexible disk FD, its structure at cross section and a full appearance of the disk itself FD as a main body of a recording medium whereas FIG. 12A shows an example of a physical format of the flexible disk FD.

The disk FD is contained in a case F with a plurality of tracks Tr formed concentrically from the periphery to the inside on the surface of the disk FD, and each track is divided into 16 sectors Se in the angular direction. Thus, the picture coding method as the program mentioned above is recorded in an area assigned for it on the disk FD.

FIG. 12C shows a structure for recording and reading out the program on the flexible disk FD.

When the program is recorded on the flexible disk FD, the computer system Cs writes in the picture coding method as the program mentioned above via a flexible disk drive FDD. When the picture coding method is constructed in the computer system Cs using the program on the flexible disk FD, the program is read out from the flexible disk FD and then transferred to the computer system Cs by the flexible disk drive FDD.

It should be noted that, in the above explanation, the flexible disk FD is used as an example of a recording medium, but the same processing can also be performed using an optical disk. In addition, the recording medium is not limited to these mentioned above, but any other medium capable of recording a program such as an IC card and a ROM cassette can be employed.

### (Fourth Embodiment)

The following is a description for the applications of the picture coding method illustrated in the above-mentioned embodiments and a system using them.

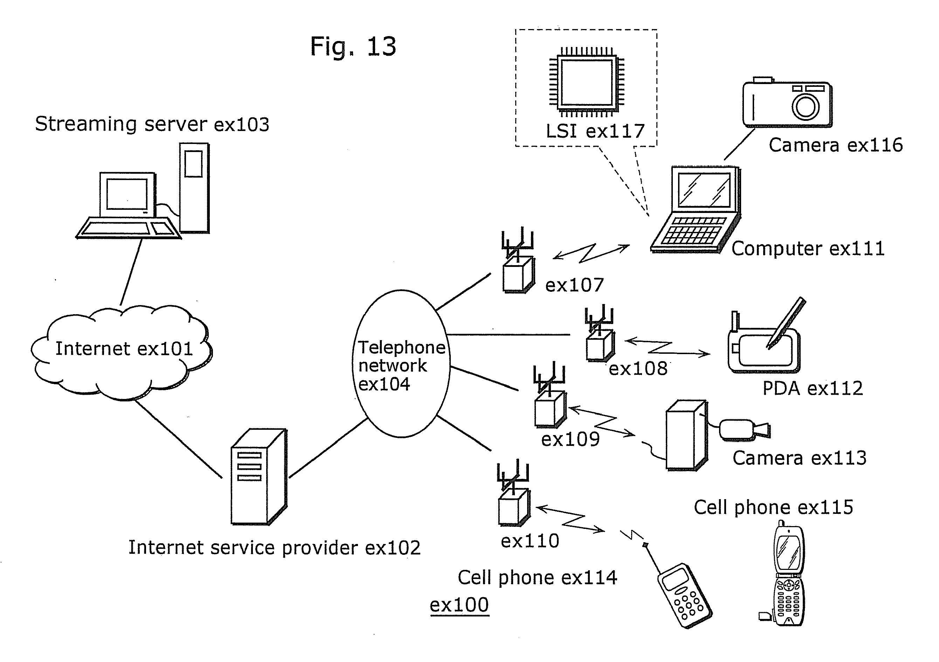

FIG. 13 is a block diagram showing an overall configuration of a content supply system ex100 for realizing content delivery service. The area for providing communication service is divided into cells of desired size, and cell sites ex107∼ex110, which are fixed wireless stations, are placed in respective cells.

This content supply system ex100 is connected to apparatuses such as a computer ex111, a Personal Digital Assistant (PDA) ex112, a camera ex113, a cell phone ex114 and a cell phone with a camera ex115 via, for example, Internet ex101, an Internet service provider ex102, a telephone network ex104, as well as the cell sites ex107∼ex110.

However, the content supply system ex100 is not limited to the configuration shown in Fig. 13 and may be connected to a combination of any of them. Also, each apparatus may be connected directly to the telephone network ex104, not through the cell sites ex107∼ex110.

The camera ex113 is an apparatus capable of shooting video such as a digital video camera. The cell phone ex114 may be a cell phone of any of the following system: a Personal Digital Communications (PDC) system, a Code Division Multiple Access (CDMA) system, a Wideband-Code Division Multiple Access (W-CDMA) system or a Global System for Mobile Communications (GSM) system, a Personal Handyphone System (PHS) or the like.

A streaming server ex103 is connected to the camera ex113 via the telephone network ex104 and also the cell site ex109, which realizes a live distribution or the like using the camera ex113 based on the coded data transmitted from the user. Either of the camera ex113, the server which transmits the data and the like may code the data. The moving picture data shot by a camera ex116 may be transmitted to the streaming server ex103 via the computer ex111. In this case, either the camera ex116 or the computer ex111 may code the moving picture data. An LSI ex117 included in the computer ex111 and the camera ex116 performs the coding processing. Software for coding and decoding pictures may be integrated into any type of recording medium (such as a CD-ROM, a flexible disk and a hard disk) that is a recording medium which is readable by the computer ex111 or the like. Furthermore, a cell phone with a camera ex115 may transmit the moving picture data. This moving picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream delivery of the content data to the clients at their requests. The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each apparatus in this system performs coding or decoding, the picture coding apparatus or the picture decoding apparatus shown in the above-mentioned embodiments can be used.

A cell phone will be explained as an example of such apparatus.

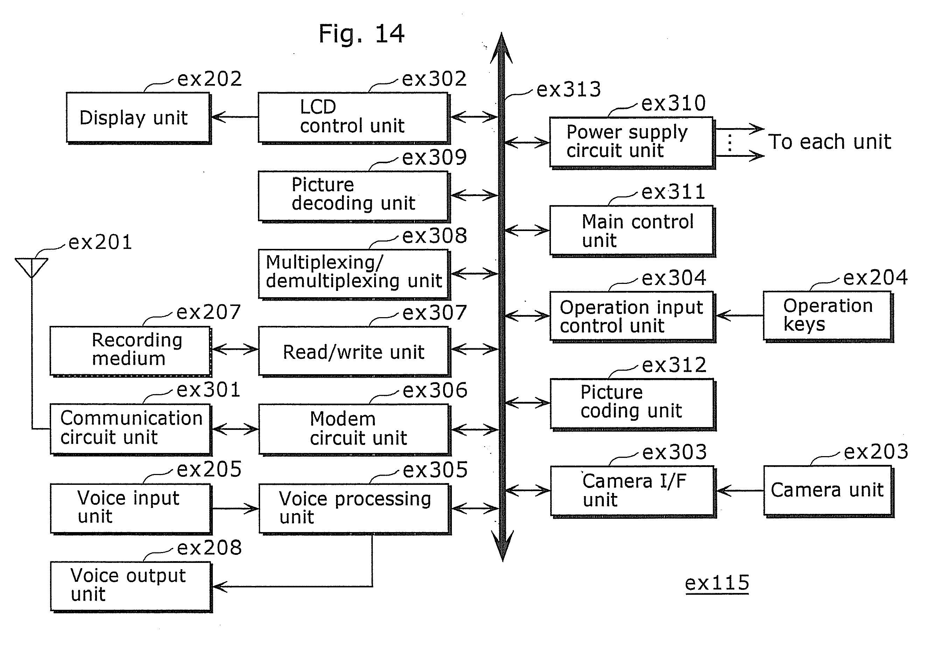

FIG. 14 is a diagram showing the cell phone ex115 using the picture coding method explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, an audio output unit ex208 such as a speaker for outputting audio, an audio input unit ex205 such as a microphone for inputting audio, a recording medium ex207 for recording coded or decoded data such as data of moving or still pictures shot by the camera, data of received e-mails and that of moving or still pictures, and a slot unit ex206 for attaching the recording medium ex207 to the cell phone ex115. The recording medium ex207 stores in itself a flash memory element, a kind of Electrically Erasable and Programmable Read Only Memory (EEPROM) that is a nonvolatile memory electrically erasable from and rewritable to a plastic case such as an SD card.

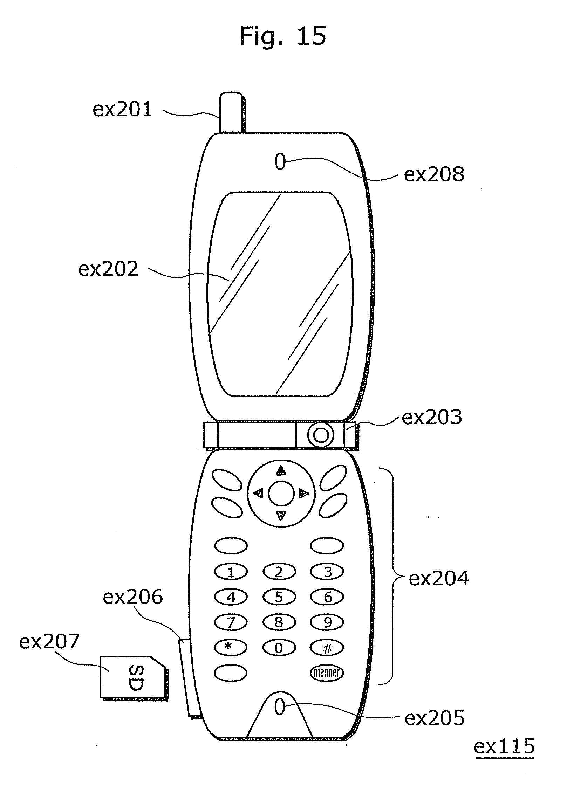

Next, the cell phone ex115 will be explained with reference to FIG. 15. In the cell phone ex115, a main control unit ex311, designed in order to control overall each unit of the main body which contains the display unit ex202 as well as the operation keys ex204, is connected mutually to a power supply circuit unit ex310, an operation input control unit ex304, a picture coding unit ex312, a camera interface unit ex303, a Liquid Crystal Display (LCD) control unit ex302, a picture decoding unit ex309, a multiplexing/demultiplexing unit ex308, a read/write unit ex307, a modem circuit unit ex306 and an audio processing unit ex305 via a synchronous bus ex313.

When a call-end key or a power key is turned ON by a user's operation, the power supply circuit unit ex310 supplies the respective units with power from a battery pack so as to activate the digital cell phone with a camera ex115 as a ready state.

In the cell phone ex115, the audio processing unit ex305 converts the audio signals received by the audio input unit ex205 in conversation mode into digital audio data under the control of the main control unit ex311 including CPU, ROM and RAM, the modem circuit unit ex306 performs spread spectrum processing for the digital audio data, and the communication circuit unit ex301 performs digital-to-analog conversion and frequency conversion for the data, so as to transmit it via the antenna ex201. Also, in the cell phone ex115, the communication circuit unit ex301 amplifies the data received by the antenna ex201 in conversation mode and performs frequency conversion and the analog-to-digital conversion to the data, the modem circuit unit ex306 performs inverse spread spectrum processing of the data, and the audio processing unit ex305 converts it into analog audio data so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs the digital-to-analog conversion and the frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as described for the present invention, compresses and codes the picture data supplied from the camera unit ex203 using the coding method employed by the picture coding apparatus as shown in the embodiments mentioned above so as to transform it into coded image data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded image data supplied from the picture coding unit ex312 and the audio data supplied from the audio processing unit ex305, using a predetermined method, then the modem circuit unit ex306 performs spread spectrum processing of the multiplexed data obtained as a result of the multiplexing, and lastly the communication circuit unit ex301 performs digital-to-analog conversion and frequency transform of the data for the transmission via the antenna ex201.

As for receiving data of a moving picture file which is linked to a Web page or the like in data communication mode, the modem circuit unit ex306 performs inverse spread spectrum processing for the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 demultiplexes the multiplexed data into a bit stream of image data and that of audio data, and supplies the coded image data to the picture decoding unit ex309 and the audio data to the audio processing unit ex305, respectively via the synchronous bus ex313.

Next, the picture decoding unit ex309, including the picture decoding apparatus as described for the present invention, decodes the bit stream of the image data using the decoding method corresponding to the coding method as shown in the above-mentioned embodiments to generate reproduced moving picture data, and supplies this data to the display unit ex202 via the LCD control unit ex302, and thus the image data included in the moving picture file linked to a Web page, for instance, is displayed. At the same time, the audio processing unit ex305 converts the audio data into analog audio data, and supplies this data to the audio output unit ex208, and thus the audio data included in the moving picture file linked to a Web page, for instance, is reproduced.

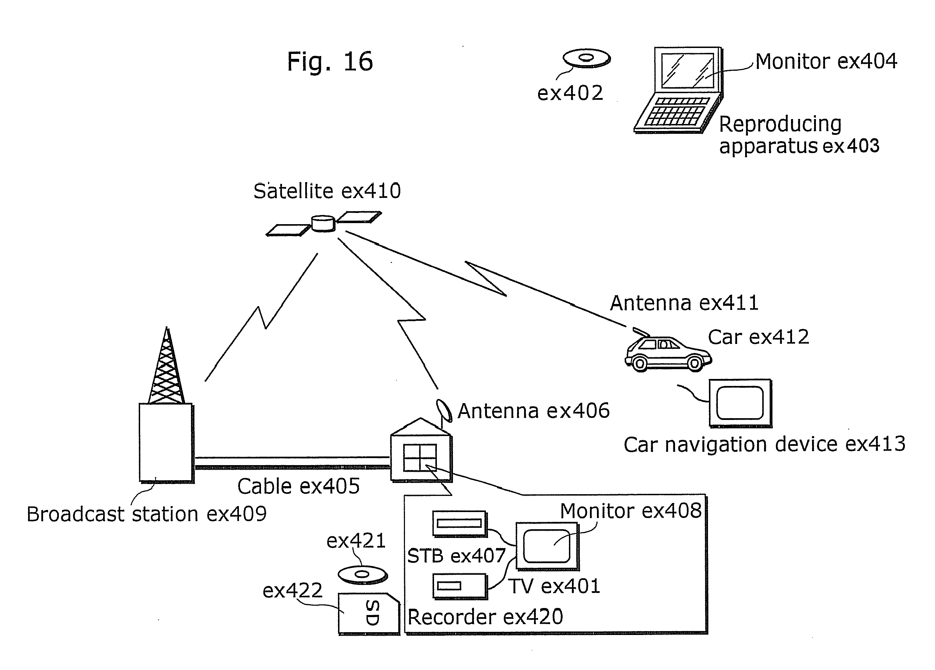

It should be noted that the present invention is not limited to the above-mentioned system since ground-based or satellite digital broadcasting has been in the news lately and at least either the picture coding apparatus or the picture decoding apparatus described in the above-mentioned embodiments can be incorporated into a digital broadcasting system as shown in FIG. 16. More specifically, a bit stream of video information is transmitted from a broadcast station ex409 to or communicated with a broadcast satellite ex410 via radio waves. Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes a coded bit stream for reproduction. The picture decoding apparatus as shown in the above-mentioned embodiments can be implemented in the reproducing apparatus ex403 for reading out and decoding the bit stream recorded on a recording medium ex402 such as a CD and a DVD. In this case, the reproduced moving picture signals are displayed on a monitor ex404. It is also conceivable to implement the picture decoding apparatus in the STB ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for replaying moving picture on a display device such as a car navigation system ex413 set in the car ex412.

Furthermore, the picture coding apparatus as shown in the above-mentioned embodiments can code picture signals and record them on the recording medium. As a concrete example, a recorder ex420 such as a DVD recorder for recording picture signals on a DVD disk ex421, a disk recorder for recording them on a hard disk can be cited. They can be recorded on an SD card ex422. When the recorder ex420 includes the picture decoding apparatus as shown in the above-mentioned embodiments, the picture signals recorded on the DVD disk ex421 or the SD card ex422 can be reproduced for display on the monitor ex408.

It should be noted that the structure without the camera unit ex203, the camera interface unit ex303 and the picture coding unit ex312, out of the components shown in FIG. 14, is conceivable for the structure of the car navigation system ex413. The same applies for the computer ex111, the television (receiver) ex401 and others.

In addition, three types of implementations can be conceived for a terminal such as the cell phone ex114: a sending/receiving terminal implemented with both an encoder and a decoder, a sending terminal implemented with an encoder only, and a receiving terminal implemented with a decoder only.

As described above, it is possible to use the picture coding method described in the above-mentioned embodiments for any of the above-mentioned apparatuses and systems, and by thus doing, the effects described in the above-mentioned embodiments can be obtained.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

### Industrial Applicability

The present invention is practicable as a coding method and a decoding method for performing predictive coding with reference to coded pictures. The methods can be employed, for example, by a web server which distributes video, a network terminal which receives it, a digital camera which can record and replay the video, a cell phone equipped with a camera, a DVD recorder/player, a PDA, a personal computer, or the like.

### It follows a list of further embodiments of the invention:

Embodiment 1 A picture coding method for predictively coding a picture with reference to pictures obtained from pictures coded and decoded, the method comprising:
   a filtering step of performing filtering processing on a decoded picture;
   a first determination step of determining a filtered picture as a reference picture, out of two pictures: a filtered picture and an filtered picture, said filtered picture being a filtered decoded picture and said filtered picture being said decoded picture; and
   a second determination step of determining an filtered picture as an output picture out of the two pictures.
Embodiment 2 The picture coding method with the features of embodiment 1, further comprising:
   a first storage step of storing the filtered picture in a memory as a reference picture;
      and
   a second storage step of storing the filtered picture in the memory as an output picture.
Embodiment 3 The picture coding method with the features of embodiment 2, further comprising a releasing step of releasing a memory area storing a reference picture which is no longer used for reference, said reference picture being among the reference pictures stored in the memory.
Embodiment 4 The picture coding method with the features of embodiment 3,
   wherein in the releasing step, when a reference picture becomes a picture which is no longer used for reference, an area storing the reference picture is released.
Embodiment 5 The picture coding method with the features of embodiment 3,
   wherein in the releasing step, when a reference picture becomes a picture which is no longer used for reference, an area storing the reference picture is released in a case in which an output picture is already outputted, said reference picture and output picture being originated from one decoded picture.
Embodiment 6 The picture coding method with the features of embodiment 1, further comprising a coding step of coding identification information indicating which of the filtered picture and the filtered picture is to be determined as an output picture.
Embodiment 7 A picture decoding method for predictively decoding a picture with reference to a picture obtained from decoded pictures, the method comprising:
   a filtering step of performing filtering processing on a decoded picture;
   a first determination step of determining a filtered picture as a reference picture, out of two pictures: a filtered picture and an filtered picture, said filtered picture being a filtered decoded picture and said filtered picture being said decoded picture; and
   a second determination step of determining an filtered picture as an output picture out of the two pictures.
Embodiment 8 The picture decoding method with the features of embodiment 7, further comprising:
   a first storage step of storing the filtered picture in a memory as a reference picture;
      and
   a second storage step of storing the filtered picture in the memory as an output picture.
Embodiment 9 The picture decoding method with the features of embodiment 8, further comprising a releasing step of releasing a memory area storing a reference picture which is no longer used for reference, said reference picture being among the reference pictures stored in the memory.
Embodiment 10 The picture decoding method with the features of embodiment 9,
   wherein in the releasing step, when a reference picture becomes a picture which is no longer used for reference, an area storing the reference picture is released.
Embodiment 11 The picture decoding method with the features of embodiment 9,
   wherein in the releasing step, when a reference picture becomes a picture which is no longer used for reference, the area for the reference picture is released in a case in which an output picture is already outputted, said reference picture and output picture being originated from one decoded picture.
Embodiment 12 The picture decoding method with the features of embodiment 7, further comprising a decoding step of decoding identification information indicating which of the filtered picture and the filtered picture is to be determined as an output picture,
   wherein in the second determination step, an output picture is redetermined according to the decoded identification information.
Embodiment 13 A picture coding apparatus for predictively coding a picture with reference to pictures obtained from pictures coded and decoded, the apparatus comprising:
   a filtering unit operable to perform filtering processing on a decoded picture;
   a first determination unit operable to determine a filtered picture as a reference picture, out of two pictures: a filtered picture and an filtered picture, said filtered picture being a filtered decoded picture and said filtered picture being said decoded picture; and
   a second determination unit operable to determine an unfiltered picture as an output picture out of the two pictures.
Embodiment 14 A picture decoding apparatus for predictively decoding a picture with reference to pictures obtained from decoded pictures, the apparatus comprising:
   a filtering unit operable to perform filtering processing on a decoded picture;
   a first determination unit operable to determine a filtered picture as a reference picture, out of two pictures: a filtered picture and an filtered picture, said filtered picture being a filtered decoded picture and said filtered picture being said decoded picture; and
   a second determination unit operable to determine an filtered picture as an output picture out of the two pictures.
Embodiment 15 A program causing a computer to execute either the picture coding method with the features of embodiment 1 or the picture decoding method with the features of embodiment 7.
Embodiment 16 A stream which includes coded pictures, the stream comprising:
   a coded picture obtained by predictively coding a filtered picture, as a reference picture; and
   identification information indicating which of an filtered picture and a filtered picture is to be determined as an output picture, said filtered picture and filtered picture being originated from one decoded picture.

## Claims

1. A picture coding method for coding an input picture into a bitstream, said method comprising:
coding an input picture to obtain a coded picture; and
multiplexing, into a bitstream, the coded picture and filtering application information that indicates which one of two pictures, a decoded picture and a filtered picture, is to be outputted for a display process, in a decoding apparatus that comprises:
a demultiplexing unit operable to demultiplex the bitstream into the coded picture and the filtering application information;
a decoding unit operable to decode the coded picture to obtain the decoded picture;
a filter operable to filter the decoded picture to obtain a filtered picture;
a selecting unit operable to select one of the two pictures, the decoded picture and the filtered picture, based on the filtering application information
a output unit operable to output the selected picture for a display process.

2. The picture coding method according to claim 1, wherein
the filter application information is generated as applicable for a specified picture and pictures following the specified picture.

3. A picture coding apparatus that codes an input picture into a bitstream, the apparatus comprising:
a coding unit operable to code an input picture to obtain a coded picture; and
a multiplexing unit operable to multiplex, into a bitstream, the coded picture and filtering application information that indicates which one of two pictures, a decoded picture and a filtered picture, is to be outputted for a display process, in a decoding apparatus that comprises:
a demultiplexing unit operable to demultiplex the bitstream into the coded picture and the filtering application information;
a decoding unit operable to decode the coded picture to obtain the decoded picture;
a filter operable to filter the decoded picture to obtain a filtered picture;
a selecting unit operable to select one of the two pictures, the decoded picture and the filtered picture, based on the filtering application information
a output unit operable to output the selected picture for a display process.

4. The picture coding apparatus according to claim 3, wherein
the filter application information is generated as applicable for a specified picture and pictures following the specified picture.
